Europäisches Patentamt

European Patent Office

Office européen des brevets

(19)

(11) Veröffentlichungsnummer: **0 257 314**
**A2**

## (12) EUROPÄISCHE PATENTANMELDUNG

(21) Anmeldenummer: **87110766.0**

(22) Anmeldetag: **24.07.87**

(51) Int. Cl.⁴: **H04Q 3/545** , H04M 3/22 , H04L 11/00

(30) Priorität: **21.08.86 DE 3628373**

(43) Veröffentlichungstag der Anmeldung:
**02.03.88 Patentblatt 88/09**

(84) Benannte Vertragsstaaten:
**AT DE IT**

(71) Anmelder: **Siemens Aktiengesellschaft Berlin und München**
**Wittelsbacherplatz 2**
**D-8000 München 2(DE)**

(72) Erfinder: **Lesinski, Georg, Dipl.-Ing.**
**Schochenbergstrasse 8**
**D-8000 München 21(DE)**

(54) **Verfahren zur Sicherstellung des Betriebs einer programmgesteuerten Vermittlungsanlage.**

(57) Für den Betrieb der betreffenden Vermittlungsanlage (EDS) vorgesehene Betriebsdaten sind in einem externen Betriebsdatenspeicher (S1) gespeichert. Für ihre Aktualisierung steht ein Arbeitsspeicher (AS) der Vermittlungsanlage zur Verfügung. Aktualisierte Betriebsdaten werden dabei vor einer Übertragung zu dem Betriebsdatenspeicher (S1) hin in einen Zwischenspeicher (S2) kopiert. Der Zwischenspeicher wird daraufhin bis zur Übernahme der aktualisierten Betriebsdaten in den Betriebsdatenspeicher (S1) durch ein Belegtkennzeichen als mit Betriebsdaten belegt gekennzeichnet. Bei Auftreten einer Betriebsstörung in der Vermittlungsanlage werden im Falle des Vorliegens eines Belegtkennzeichens für den Zwischenspeicher (S2) die in diesem zwischengespeicherten aktualisierten Betriebsdaten über den genannten Arbeitsspeicher in den Betriebsdatenspeicher (S1) eingespeichert. Im Falle des Nichtvorliegens eines Belegtkennzeichens werden dagegen die in dem Betriebsdatenspeicher (S1) eingespeicherten Betriebsdaten als aktuelle Betriebsdaten genutzt.

FIG 1

EP 0 257 314 A2

# Verfahren zur Sicherstellung des Betriebs einer programmgesteuerten Vermittlungsanlage

Die Erfindung betrifft ein Verfahren zur Sicherstellung des Betriebs einer programmgesteuerten Vermittlungsanlage mit für deren Betrieb jeweils vorgesehenen, ggf. aktualisierten Betriebsdaten, welche in einem externen Betriebsdatenspeicher gespeichert sind und für deren Aktualisierung ein Arbeitsspeicher der Vermittlungsanlage zur Verfügung gestellt wird, aus welchem jeweils die jeweils aktualisierten Betriebsdaten in den Betriebsdatenspeicher eingespeichert werden.

Für den Betrieb einer programmgesteuerten Vermittlungsanlage sind u.a. zwei Klassen von Störungen von Bedeutung. Eine erste Klasse von Störungen wirkt sich derart stark aus, daß ein Vermittlungsbetrieb nicht ordnungsgemäß aufrechterhalten werden kann. Beispiele für derartige Störungen sind eine Überlastung des Systems und ein damit verbundener Mangel an Betriebsmitteln sowie schaltungstechnische Fehler in zentralen bzw. peripheren Einrichtungen der Vermittlungsanlage. Bei Auftreten derartiger Störungen laufen in der Regel Steuerungsvorgänge ab, die die betreffende Vermittlungsanlage zumindest teilweise in einen definierten Ausgangszustand überführen. Von diesem Ausgangszustand aus kann dann der Vermittlungsbetrieb wieder aufgenommen werden. Bei einer derartigen Überführung gehen die bis dahin in dem Arbeitsspeicher der Vermittlungsanlage befindlichen Informationen zumindest teilweise verloren.

Eine weitere Klasse von Störungen stellen Störungen in einem Betriebsdatenspeicher oder in ihm vorgeschalteten Steuereinheiten dar, die einen Zugriff auf die in diesen Betriebsdatenspeicher gespeicherten Betriebsdaten von der Vermittlungsanlage her unmöglich machen. Nach Behebung einer solchen Störung müssen auch in diesem Fall Steuerungsvorgänge angestoßen werden, die den Betriebsdatenspeicher in einen definierten arbeitsfähigen Zustand überführen.

Wenn eine der zuvor erwähnten Störungen zeitlich mit einer Änderung von Betriebsdaten zusammenfällt, so kann der Fall eintreten, daß in dem Betriebsdatenspeicher lediglich partiell aktualisierte Betriebsdaten, die ein ordnungsgemäßen Vermittlungsbetrieb nicht zulassen, gespeichert sind.

Im Zusammenhang mit der Verwaltung von Datenbanksystemen ist bereits ein sog. Transaktions-System bekannt (Zeitschrift "Elektronische Rechenanlagen", 27. Jahrgang, Heft 1/1985, Seiten 15 bis 22). Sind im Zuge einer Transaktion die von dem Transaktionsystem verwalteten, auf einem Plattenspeicher gespeicherten Benutzerdaten zu verändern, so werden zunächst sämtliche über den Speicherort der zu ändernden Benutzerdaten Aufschluß gebenden, ebenfalls auf dem Plattenspeicher gespeicherten Daten (Metadaten) in einen Arbeitsspeicher eines zu dem Datenbanksystem gehörenden Rechners übernommen. Mit Hilfe dieser Metadaten, werden die in Frage kommenden Benutzerdaten geändert und an einem anderen Ort des Plattenspeichers gespeichert. In dem Arbeitsspeicher werden dabei alle diejenigen Daten gesammelt, die benötigt werden, die in dem Arbeitsspeicher sich noch befindenden Metadaten zu aktualisieren. Bei diesen Daten handelt es sich somit um eine Beschreibung der Veränderung der Metadaten. Diese Beschreibung wird in einem Sicherungsdatenbereich des Plattenspeichers gespeichert.

Meldet nun das Datenbanksystem, daß die gerade laufende Transaktion nicht beendet werden kann, so setzt das Transaktionssystem die Transaktion zurück, indem es die Veränderung der Metadaten im Arbeitsspeicher nicht durchführt und die bereits in dem Sicherungsdatenbereich des Plattenspeichers gesicherte Beschreibung der Veränderung der Metadaten nicht berücksichtigt. Konnte dagegen das Datenbanksystem die laufende Transaktion abschließen, so verändert das Transaktionssystem die Metadaten im Arbeitsspeicher, durch die damit die geänderten Benutzerdaten zugänglich sind. Geht nach dieser Änderung der Speicherinhalt des Arbeitsspeichers verloren, so wird anhand der auf dem Plattenspeicher noch gespeicherten Metadaten und der ebenfalls auf dem Plattenspeicher in dem bereits genannten Sicherungsdatenbereich gespeicherten Beschreibung der Veränderung der Metadaten der aktuelle Zustand der Metadaten wiederhergestellt.

Ein dem vorstehend beschriebenen Transaktionssystem für Datenbanksysteme entsprechendes System wäre zwar auch prinzipiell zur Sicherung des Betriebs von Vermittlungsanlagen anwendbar. Die Anwendung eines derartigen Systems würde jedoch bei der Aktualisierung von Betriebsdaten in den betreffenden Vermittlungsanlagen zu einem beträchtlichen zusätzlichen Steuerungsaufwand führen. Ein solcher zusätzlicher Steuerungsaufwand ist aber im Hinblick auf die Belastung der Vermittlungsanlage zuweilen unerwünscht.

Es ist nun Aufgabe der vorliegenden Erfindung, einen Weg zu zeigen, wie bei einem Verfahren der eingangs genannten Art der Betrieb einer Vermittlungsanlage bei einer Aktualisierung der für diesen Betrieb vorgesehenen Betriebsdaten mit einem gegenüber dem Stand der Technik geringeren Steuerungsaufwand sichergestellt werden kann.

Gelöst wird die vorstehend aufgezeigte Aufgabe bei einem Verfahren der eingangs genannten Art erfindungsgemäß da durch, daß in dem Arbeitsspeicher sich befindende aktualisierte Betriebsdaten vor einer Übertragung in den genannten Betriebsdatenspeicher in einen externen Zwischenspeicher kopiert werden,

daß auf ein solches Kopieren hin der Zwischenspeicher durch ein Belegtkennzeichen als mit aktuellen Betriebsdaten belegt gekennzeichnet wird, daß lediglich im Anschluß an eine Übertragung der in dem Arbeitsspeicher noch befindlichen Betriebsdaten in den genannten Betriebsdatenspeicher das Belegtkennzeichen durch ein den Freizustand des Zwischenspeichers anzeigendes Freikennzeichen ersetzt wird

und daß bei Auftreten einer Störung des Betriebs der Vermittlungsanlage und einem damit ggf. verbundenen Verlust des Speicherinhalts des Arbeitsspeichers in dem Fall, daß für den Zwischenspeicher ein Belegtkennzeichen vorliegt, die in dem Zwischenspeicher zwichengespeicherten Betriebsdaten in den Arbeitsspeicher übernommen und aus diesem dann in den Betriebsdatenspeicher eingespeichert werden, während in dem Fall, daß für den Zwischenspeicher ein Freikennzeichen vorliegt, die im Betriebsdatenspeicher eingespeicherten Betriebsdaten als aktuelle Betriebsdaten genutzt werden.

Die Erfindung bringt den Vorteil mit sich, daß in einer Vermittlungsanlage bei einer notwendigen Aktualisierung von Betriebsdaten zunächst lediglich die aktualisierten Betriebsdaten in den Zwischenspeicher zu kopieren sind. Bis zur vollständigen Übertragung der aktualisierten Betriebsdaten zu dem Betriebsdatenspeicher hin sind die kopierten Betriebsdaten in dem lediglich bis zum Abschluß dieser Über-tragung als belegt gekennzeichneten Zwischenspeicher zwischengespeichert. Tritt während des Betriebs der betreffenden Vermittlungsanlage ein Störung auf, welche einen Verlust des Speicherinhaltes des Arbeitsspeichers der Vermittlungsanlage oder einen Ausfall des Betriebsdatenspeichers zur Fol ge hat, so ist bei einer erneuten Inbetriebnahme der Vermittlungsanlage bzw. des Betriebsdatenspeichers anhand des gerade für den Zwischenspeicher vorliegenden Kennzeichens lediglich zu überprüfen, ob als aktuelle Betriebsdaten die in dem ·Betriebsdatenspeicher oder die in den Zwischenspeicher zwischengespeicherten Betriebsdaten zu benutzen sind. Im ersten Falle sind in der Datenvermittlungsanlage selbst keine weiteren Aktivitäten erforderlich. Im zweiten Falle sind dagegen lediglich die in dem Zwischenspeicher gespeicherten Betriebsdaten über den Arbeitsspeicher der Vermittlungsanlage zu dem bereits genannten Betriebsdatenspeicher hin zu übertragen. Damit ist bei dem Verfahren gemäß der vorliegenden Erfindung für die Sicherstellung des Betriebs einer Vermittlungsanlage ein wesentlich geringerer Steuerungsaufwand gegenüber einer Anwendung eines dem zuvor beschriebenen Transaktionssystems entsprechenden Systems erforderlich.

Ein weiterer Vorteil der Erfindung besteht darin, daß für die Sicherstellung des Betriebs einer Vermittlungsanlage lediglich zwei externe Datenspeicher erforderlich sind, nämlich ein Betriebsdatenspeicher und ein Zwischenspeicher. Demgegenüber benötigt das bekannte Transaktionssystem insgesamt mindestens drei externe Speicher. Zwei dieser Speicher werden für die Speicherung von Betriebsdaten bzw. aktualisierten Betriebsdaten benötigt, während der dritte externe Speicher für die Speicherung von Daten dient, die die Veränderung der bereits oben erwähnten Metadaten wiederspiegeln.

Zweckmäßigerweise werden als Betriebsdatenspeicher und Zwischenspeicher gesonderte Speicherbereiche ein und desselben Plattenspeichers genutzt. Damit können in der Vermittlungsanlage bereits vorhandene pheripere Einrichtungen für die Einrichtung des Zwischenspeichers mitbenutzt wer den.

Im folgenden wird nun die Erfindung anhand von Zeichnungen näher erläutert.

FIG 1 zeigt in einem Blockschaltbild eine Vermittlungsanlage, bei der die Erfindung angewandt ist, und

FIG 2 und 3 geben jeweils zeitliche Abläufe wieder, auf die im Zuge der Beschreibung der Erfindung näher eingegangen wird.

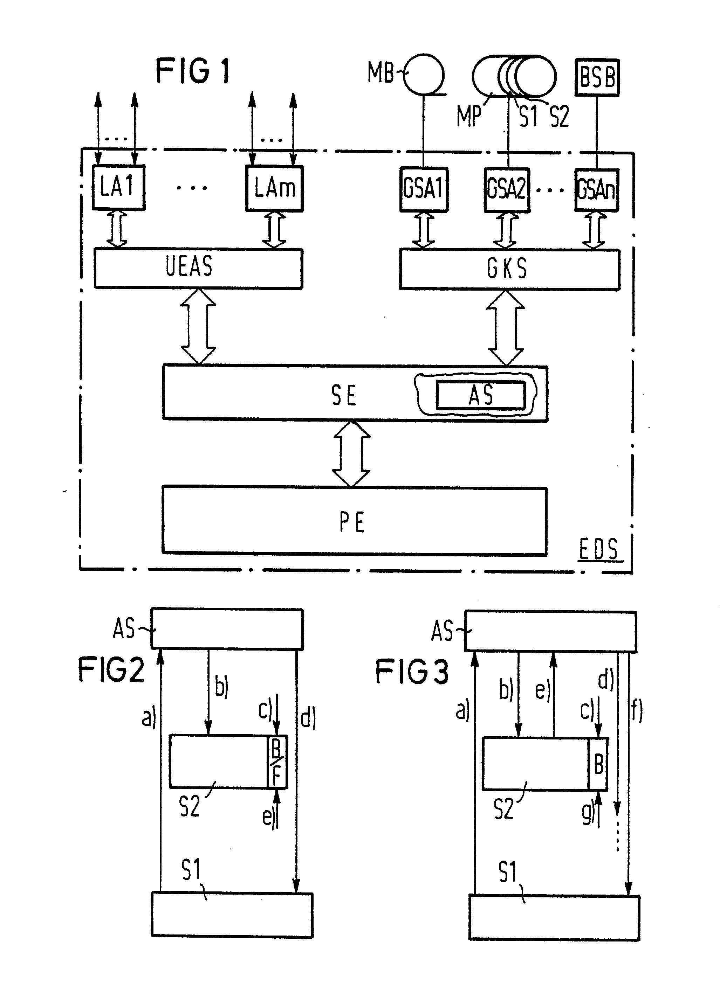

In Figur 1 ist ausschnittweise eine programmgesteuerte Fernschreib-und Datenvermittlungsanlage EDS dargestellt. Diese Fernschreib-und Datenvermittlungsanlage weist als zentrale Einrichtungen eine Programmsteuereinheit PE und eine mit dieser verbundene Speichereinheit SE auf. Die Speichereinheit verfügt dabei über die für den Betrieb der Fernschreib-und Datenvermittlungsanlage erforderlichen Arbeitsspeicher und Programmspeicher. Von diesen Speichern ist lediglich ein Arbeitsspeicher AS angedeutet.

Die Speichereinheit SE ist mit einer Übertragungsablaufsteuerung UEAS verbunden. Diese steuert den Signalaustausch zwischen den genannten zentralen Einrichtungen und Leitungseinrichtungen LA1 bis LAm. An diese Leitungsanschlußeinrichtungen ist jeweils eine Mehrzahl von Übertragungsleitungen angeschlossen. Über diese Übertragungsleitungen werden von der Fernschreib-und Datenvermittlungsanlage EDS her entweder Verbindungen zu Teilnehmer-Endeinrichtungen, wie zum z.B. Fernschreibeinrichtungen oder Datensende-/Empfangseinrichtungen, oder zu weiteren Fernschreib-und Datenvermittlungsanlagen eines Vermittlungsnetzes hergestellt.

Die genannte Speichereinheit SE ist außerdem mit einer Gerätekanalsteuerung GKS verbunden. An diese Gerätekanalsteuerung ist eine Mehrzahl von Geräteanschlußeinrichtungen GSA1 bis GSAn angeschlossen. Über diese Geräteanschlußschaltungen stehen die zentralen Einrichtungen der Fernschreib-und Datenvermittlungsanlage EDS mit externen Betriebseinrichtungen, wie z.B. Magnetplattenspeichern, Magnetbandspeichern und Bedieneinrichtungen, in Verbindung. Von den genannten Geräteanschlußeinrichtungen sind in Figur 1 lediglich die Geräteanschlußeinrichtungen GSA1, GSA2 und GSAn dargestellt. An die Geräteanschlußeinrichtung GSA1 möge beispielsweise ein Magnetbandspeicher MB, an die Geräteanschlußeinrichtung GSA2 ein mindestens zwei gesonderte Speicherbereiche S1 und S2 aufweisender Magnetplattenspeicher MP und an die Geräteanschlußeinrichtung GSAn ein als Bedienungseinrichtung dienender Bedienblattschreiber BSB angeschlossen sein.

Auf das Zusammenwirken der zuvor genannten Einrichtungen der Fernschreib-und Datenvermittlungsanlage EDS wird nicht näher eingegangen, da dieses Zusammenwirken bereits hinlänglich bekannt ist (z.B. aus der Druckschrift "Siemens-Zeitschrift", 51 (1977), Heft 2, Seiten 82 bis 87).

Im folgenden wird nun unter Bezugnahme auf die Figuren 2 und 3 auf das Verfahren zur Sicherstellung des Betriebs der Fernschreib-und Datenvermittlungsanlage EDS näher eingegangen. Hierzu sei davon ausgegangen, daß sämtliche für den Betrieb der Fernschreib-und Datenvermittlungsanlage EDS vorgesehenen Betriebsdaten, wie z.B. Daten zur Beschreibung der mit der Vermittlungsanlage verbundenen Übertragungsleitungen, in einem vorgegebenen Betriebsdatenspeicher, beispielsweise in dem Speicherbereich S1 des Magnetplattenspeichers MP, gespeichert sind. Ein Teil der Betriebsdaten ist dabei kopiert und steht während des Betriebs der Fernschreib-und Datenvermittlungsanlage zusätzlich in dem Arbeitsspeicher AS zur Verfügung. Bei diesen Betriebsdaten handelt es sich um Daten, auf die im Zuge des Aufbaus von Verbindungen mit einer hohen Geschwindigkeit zugegriffen wird. Beispiele dafür sind Daten zur Leitweglenkung und Daten zur Identifizierung der einzelnen Teilnehmer.

Neben den gerade genannten Daten existieren noch Betriebsdaten, die lediglich über den Magnetplattenspeicher zugänglich sind. Bei diesen Daten handelt es sich um Daten, an die nur geringe Anforderungen bezüglich der Zugriffsgeschwindigkeit gestellt sind. Als Beispiele für derartige Daten seien hier Zuordnungen von Teilnehmern zu einzelnen von der Fernschreib-und Datenvermittlungsanlage her bereitgestellten Diensten genannt.

Ist nun während des Betriebs der Fernschreib-und Datenvermittlungsanlage EDS eine Aktualisierung von Betriebsdaten erforderlich, so können dafür von dem Bedienblattschreiber BSB aus der Programmsteuereinheit PE Anweisungen über die Geräteanschlußeinrichtung GSAn und die Gerätekanalsteuerung GKS zugeführt werden. Eine Aktualisierung kann dabei einerseits darin bestehen, daß bereits in dem Betriebsdatenspeicher S1 gespeicherte Betriebsdaten lediglich zu ändern sind. Dafür werden die gespeicherten Betriebsdaten unter der Steuerung der Programmsteuereinheit PE über die Geräteanschlußeinrichtung GSA2 und die Gerätekanalsteuerung GKS in den Arbeitsspeicher AS übernommen und dort entsprechend dem Erfordernis geändert (a in Figur 2).

Andererseits kann eine Aktualisierung von Betriebsdaten auch in einer Neueingabe von bisher noch nicht festgelegten Betriebsdaten bestehen.

Nach Abschluß einer Aktualisierung von Betriebsdaten werden die in dem Arbeitsspeicher AS befindlichen Betriebsdaten zusammen mit den vorhandenen Adresseninformationen, die Aufschluß über den Speicherort dieser Betriebsdaten innerhalb des Betriebsdatenspeichers S1 geben, unter der Steuerung der Programmsteuereinheit PE und der Gerätekanalsteuerung GKS in den bereits genannten, als Zwischenspeicher benutzten Speicherbereich S2 des Magnetplattenspeichers MP kopiert (b in Figur 2). Dieser Zwischenspeicher wird daraufhin durch ein festgelegtes Belegtkennzeichen als mit aktualisierten Betriebsdaten belegt gekennzeichnet. Dieses Belegtkennzeichen kann dabei beispielsweise in einer gesonderten Speicherzelle des Zwischenspeichers in Form eines vorgegebenen Binärzustandes eines Kennzeichnungsbits eingetragen sein.

Im Anschluß an die gerade erwähnte Zwischenspeicherung von Betriebsdaten werden die in dem Arbeitsspeicher AS noch gespeicherten aktualisierten Betriebsdaten über die Gerätekanalsteuerung GKS und die Geräteanschlußeinrichtung GSA2 zu dem Betriebsdatenspeicher S1 des Magnetplattenspeichers MP hin übertragen und dort in den durch die ebenfalls in dem Arbeitsspeicher gespeicherten Adresseninformationen bezeichneten Bereich gespeichert (d in Figur 2). Die bis dahin in diesem Bereich gespeicherten Betriebsdaten werden dabei ggf. überschrieben. Damit ist dann auch in dem Betriebsdatenspeicher die Aktualisierung der Betriebsdaten vollzogen und das bis zu diesem Zeitpunkt für den Zwischenspeicher S2 vorliegende Belegtkennzeichen wird durch ein von diesem abweichendes Freikennzeichen ersetzt. Bei dem oben angegebenen Beispiel bedeutet das, daß der den Belegtzustand des Zwischenspeichers kennzeichnende Binärzustand nunmehr invertiert ist (e in Figur 2). Dieses Freikennzeichen zeigt an, daß der Zwischenspeicher S2 keine aktualisierten Betriebsdaten mehr enthält, die zu dem Betriebsdatenspeicher S1 hin zu übertragen sind.

Die zuvor erläuterten, in Figur 2 angedeuteten Verfahrensschritte laufen bei einer Aktualisierung von Betriebsdaten während eines störungsfreien Betriebs der Fernschreib-und Datenvermittlungsanlage EDS ab.

Es wird nun noch der Fall betrachtet, daß während einer Aktualisierung von Betriebsdaten eine Strörung im Betrieb der Fernschreib-und Datenvermittlungsanlage EDS auftritt. Wie bereits eingangs ausgeführt, kann sich eine solche Störung derart stark auswirken, daß der Vermittlungsbetrieb nicht ordnungsgemäß aufrecht erhalten werden kann. Aus diesem Grunde wird bei einer derartigen Störung von der Programmsteuereinheit PE her eine Steuerroutine angestoßen, die die Fernschreib-und Datenvermittlungsanlage zumindest teilweise in einen definierten Ausgangszustand überführt, von dem aus dann wieder der Vermittlungsbetrieb aufgenommen werden kann. Diese Überführung bewirkt, daß die bis dahin in dem Arbeitsspeicher AS der Fernschreib-und Datenvermittlungsanlage EDS befindlichen Daten und damit auch die ggf. gerade zu aktualisierenden Betriebsdaten verloren gehen. Eine Störung der Vermittlungsanlage kann aber auch, wie ebenfalls bereits erwähnt, in einem Ausfall des Betriebsdatenspeichers bzw. der diesen vorgeschalteten Steuereinheiten bestehen. Nach Behebung der Ursache dieses Ausfalls ist dann im Zuge der genannten Steuerroutine der Betriebsdatenspeicher wieder in Betrieb zu nehmen. Um auch in solchen Fällen der Fernschreib-und Datenvermittlungsanlage EDS für die erneute Aufnahme des Vermittlungsbetriebs relevante Betriebsdaten zur Verfügung zu stellen, wird im Zuge der genannten Steuerroutine von der Programmsteuereinheit PE her das gerade für den Zwischenspeicher S2 vorliegende Kennzeichen abgefragt. Stellt sich dabei, wie in Figur 3 angedeutet, heraus, daß für den Zwischenspeicher S2 gerade ein Belegtkennzeichen vorliegt, d.h. daß die in Figur 2 mit a bis c bezeichneten Verfahrensschritte ausgeführt werden konnten der Verfahrensschritt d dagegen aufgrund einer Störung abgebrochen werden mußte, so werden die zwischengespeicherten bereits aktualisierten Betriebsdaten zusammen mit den ebenfalls zwischengespeicherten Adresseninformationen in den Arbeitsspeicher AS übernommen (e in Figur 3). Von dort aus werden dann die aktualisierten Betriebsdaten in den durch die Adresseninformationen bezeichneten Bereich des Betriebsdatenspeichers S1 gespeichert (f in Figur 3). Damit ist die Aktualisierung von Betriebsdaten in dem Betriebsdatenspeicher S1, die zunächst durch eine Störung nicht vorgenommen werden konnte, vollzogen. Der Fernschreib-und Datenvermittlungsanlage EDS stehen somit für die erneute Aufnahme des Vermittlungsbetriebs aktualisierte Betriebsdaten zur Verfügung.

Im Anschluß an die zuvor erwähnte Übernahme der aktualisierten Betriebsdaten in den Arbeitsspeicher AS wird im übrigen das noch für den Zwischenspeicher S2 vorliegende Belegtkennzeichen durch eine Freikennzeichen ersetzt (g in Figur 3).

Ergibt dagegen die Abfrage im Zuge der zuvor erwähnten Steuerroutine, daß für den Zwischenspeicher gerade ein Freikennzeichen vorliegt, d.h. daß entweder eine Aktualisierung von Betriebsdaten nicht durchgeführt oder bereits abgeschlossen ist, so aktiviert die Programmsteuereinheit PE keine innerhalb der Fernsprech-und Datenvermittlungsanlage EDS ablaufende Vorgänge zur Aktualisierung von Betriebsdaten. Vielmehr stehen die bis dahin in dem Betriebsdatenspeicher S1 gespeicherten Betriebsdaten für die erneute Aufnahme des Vermittlungsbetriebs der Fernschreib-und Datenvermittlungsanlage zur Verfügung. Eine ggf. aufgrund der eingetretenen Störung zunächt nicht ausführbare Aktualisierung von Betriebsdaten kann dann während des Betriebs der Fernschreib-und Datenvermittlungsanlage erneut veranlaßt werden.

Abschließend sei noch darauf hingewiesen, daß zwar das Verfahren gemäß der vorliegenden Erfindung lediglich am Beispiel einer Fernschreib-und Datenvermittlungsanlage erläutert worden ist. Die Anwendung dieses Verfahrens ist jedoch nicht auf derartige Vermittlungsanlagen beschränkt. Vielmehr ist es generell in Vermittlungsanlagen anwendbar, in welchen während des Vermittlungsbetriebs Betriebsdaten änderbar sind.

## Ansprüche

1. Verfahren zur Sicherstellung des Betriebs einer programmgesteuerten Vermittlungsanlage (EDS) mit für deren Betrieb jeweils vorgesehenen, gegebenenfalls aktualisierten Betriebsdaten, welche in einem externen Betriebsdatenspeicher (S1) gespeichert sind und für deren Aktualisierung ein Arbeitsspeicher (AS) der Vermittlungsanlage (EDS) zur Verfügung gestellt wird, aus welchem die jeweiligen aktualisierten Betriebsdaten in den Betriebsdatenspeicher (S1) eingespeichert werden,
**dadurch gekennzeichnet,**
daß in dem Arbeitsspeicher (AS) sich befindende aktualisierte Betriebsdaten vor einer Übertragung in den genannten Betriebsdatenspeicher (S1) in einen externen Zwischenspeicher (S2) kopiert werden, daß auf ein solches Kopieren hin der Zwischenspeicher (S2) durch ein Belegtkennzeichen als mit aktuellen Betriebsdaten belegt gekennzeichnet wird, daß lediglich im Anschluß an eine Übertragung der in dem Arbeitsspeicher (S1) noch befindlichen Betriebsdaten in den genannten Betriebsdatenspeicher (S1) das Belegtkennzeichen durch ein den Freizustand des Zwischenspeichers (S2) anzeigendes Freikennzeichen ersetzt wird und daß bei Auftreten einer Störung im Betrieb der Vermittlungsanlage (EDS) und einem damit ggf. verbundenen Verlust des Speicherinhalts des Arbeitsspeichers (AS) in dem Fall, daß für den Zwischenspeicher (S2) ein Belegtkennzeichen vorliegt, die in dem Zwischenspeicher zwischengespeicherten Betriebsdaten in den Arbeitsspeicher übernommen und aus diesem dann in den Betriebsdatenspeicher (S1) eingespeichert werden, während in dem Fall, daß für den Zwischenspeicher (S2) ein Freikennzeichen vorliegt, die im Betriebsdatenspeicher (S1) eingespeicherten Betriebsdaten als aktuelle Betriebsdaten genutzt werden.

2. Verfahren nach Anspruch 1 oder 2, **dadurch gekennzeichnet,** daß als Betriebsdatenspeicher (S1) und Zwischenspeicher (S2) gesonderte Speicherbereiche ein und desselben Plattenspeichers genutzt werden.

0 257 314

FIG 1

FIG2

FIG 3